# EUROPEAN PATENT APPLICATION

(11) **EP 4 815 122 A1**
(43) Date of publication of application: **30.09.2026**
(21) Application number: 24928011.6
(22) Date of filing: 14.08.2024
(51) Int. Cl.: H01M 50/103

(54) **BATTERY CELL, BATTERY AND ELECTRIC DEVICE**

(30) Priority: 05.03.2024 CN 202420428211 U
(71) Applicant: Contemporary Amperex Technology Co., Limited, Ningde, Fujian 352100 (CN)
(72) Inventor: SU, Huasheng, Ningde, Fujian 352100 (CN); ZHENG, Yulian, Ningde, Fujian 352100 (CN); HUANG, Shoujun, Ningde, Fujian 352100 (CN); WANG, Peng, Ningde, Fujian 352100 (CN); JIN, Haizu, Ningde, Fujian 352100 (CN)
(74) Representative: Lorenz Seidler Gossel Part. mbB
(86) International application number: PCT/CN2024/112140
(87) International publication number: WO 2025/185080

(57) **Abstract**

Provided in the present application are a battery cell, a battery and an electric device. The battery cell comprises a casing and a protective member, wherein the casing comprises a first wall portion, the first wall portion having a first surface, the first surface being provided with pressure relief grooves, and the first wall portion being configured to be capable of splitting along the pressure relief grooves when the battery cell undergoes pressure relief. The protective member is arranged on the first surface, and covers the pressure relief grooves. In the direction of thickness of the first wall portion, the protective member and openings of the pressure relief grooves are spaced apart from each other. The protective member is provided on the first wall portion of the battery cell. The protective member can resist external force interference and protect the pressure relief grooves, and can also limit the deformation of the first wall portion and reduce the risk of the first wall portion splitting in advance along the pressure relief grooves due to the pressure relief grooves suffering from a change of pressure inside the battery cell. By means of spacing the protective member apart from the openings of the pressure relief grooves, when the battery cell undergoes pressure relief, the protective member is not prone to preventing the first wall portion from splitting along the pressure relief grooves, such that when the battery cell undergoes pressure relief, the pressure relief grooves can quickly split to relieve pressure, thereby facilitating an improvement in the reliability of the battery cell.

## Description

### CROSS-REFERENCE TO RELATED APPLICATION

The present application claims priority to Chinese Patent Application (Application No. 202420428211.4), filed on March 05, 2024 and entitled "BATTERY CELL, BATTERY, AND ELECTRIC DEVICE", the content of which is incorporated herein by reference in its entirety.

### TECHNICAL FIELD

The present application relates to the field of batteries, and in particular, to a battery cell, a battery, and an electric device.

### BACKGROUND

Batteries are widely used in the new energy field, such as in electric vehicles and new energy vehicles. New energy vehicles and electric vehicles have become a new trend in the development of the automobile industry. Battery technology advancement requires consideration of various design factors at the same time, such as battery service life, energy density, discharge capacity, charging and discharging rate, and other performance parameters. In addition, the reliability of batteries also needs to be considered. However, the reliability of current batteries is relatively poor.

### SUMMARY

An objective of embodiments of the present application is to provide a battery cell, a battery, and an electric device, which aim to solve the problem of relatively poor reliability of batteries in the related art.

In a first aspect, the embodiments of the present application provide a battery cell, and the battery cell includes a shell and a protective member. The shell includes a first wall part, the first wall part is provided with a first surface, the first surface is provided with a pressure relief groove, and the first wall part is configured to be capable of cracking along the pressure relief groove during pressure relief of the battery cell. The protective member is disposed on the first surface, the protective member shields the pressure relief groove, and in a thickness direction of the first wall part, the protective member and a groove opening of the pressure relief groove are arranged with a gap.

In the above technical solution, the first wall part of the battery cell is provided with a protective member, the protective member exhibits a certain strength, can resist external force interference to protect the pressure relief groove, and can also limit the deformation of the first wall part, thereby reducing the risk of the first wall part cracking in advance along the pressure relief groove caused by the pressure relief groove being subjected to a pressure change inside the battery cell. In addition, by providing the gap between the protective member and the groove opening of the pressure relief groove, the protective member does not easily prevent the first wall part from cracking along the pressure relief groove during the pressure relief of the battery cell, such that the pressure relief groove can rapidly crack for pressure relief during the pressure relief of the battery cell, which is beneficial to improving the reliability of the battery cell.

As an optional technical solution of the embodiments of the present application, the first surface is provided with a protrusion, and the protrusion is in contact with the protective member, such that the protective member and the groove opening of the pressure relief groove are arranged with the gap.

In the above technical solution, by providing the protrusion on the first surface, the protective member can be attached to the first surface and the protrusion, which can not only protect the pressure relief groove, but also limit the deformation of the first wall part, thereby reducing the risk of the first wall part cracking in advance along the pressure relief groove caused by the pressure relief groove being subjected to a pressure change inside the battery cell. Since the protrusion protrudes from the first surface, when the protective member is disposed on the first surface and the protrusion, the protective member can cross the groove opening position of the pressure relief groove, such that the protective member and the groove opening of the pressure relief groove are arranged with the gap.

As an optional technical solution of the embodiments of the present application, the pressure relief groove defines a predetermined pressure relief zone, the predetermined pressure relief zone is configured to crack with the pressure relief groove as a boundary during the pressure relief of the battery cell, and the protrusion is located in the predetermined pressure relief zone.

In the above technical solution, the pressure relief groove defines the predetermined pressure relief zone, and the protrusion is disposed in the predetermined pressure relief zone, which may also be understood as the pressure relief groove being disposed in an enclosing manner on an outer side of the protrusion. In this way, when the protective member is in contact with the protrusion and the first surface, the protective member can better shield the pressure relief groove, and the protective member and the groove opening of the pressure relief groove are arranged with the gap.

As an optional technical solution of the embodiments of the present application, the first surface is a surface, facing away from an interior of the shell, of the first wall part.

In the above technical solution, the first surface is the outer surface of the first wall part. In one aspect, the protective member can be disposed more conveniently. In another aspect, when the gas inside the battery cell acts on the first wall part, there is no need to bypass the protective member, thereby facilitating rapid pressure relief of the battery cell.

As an optional technical solution of the embodiments of the present application, the protective member includes an insulating layer and a first adhesive layer, the first adhesive layer is disposed on one side of the insulating layer, and the first adhesive layer connects the first wall part and the insulating layer.

In the above technical solution, the protective member includes an insulating layer, and the insulating layer can play a role of insulation and isolation, thereby reducing the risk of a short circuit caused by the contact between another component and the first wall part. The protective member further includes a first adhesive layer, the first adhesive layer being adhesive, and the protective member can be quickly adhered to the first wall part through the first adhesive layer.

As an optional technical solution of the embodiments of the present application, the protective member includes a second adhesive layer and a plurality of insulating layers, the plurality of insulating layers are disposed in a stacked manner, and two adjacent insulating layers are connected through the second adhesive layer.

In the above technical solution, by providing the plurality of insulating layers, the plurality of insulating layers are disposed in a stacked manner, and the plurality of insulating layers can provide higher strength and better insulating property. The two adjacent insulating layers are connected through the second adhesive layer, such that the protective member exhibits better toughness, and the protective member is more easily attached to the shell body to better protect the pressure relief groove and limit the deformation of the first wall part, thereby reducing the risk of the first wall part cracking in advance along the pressure relief groove caused by the pressure relief groove being subjected to a pressure change inside the battery cell.

As an optional technical solution of the embodiments of the present application, a material of the insulating layer is polyethylene terephthalate or polyimide.

In the above technical solution, using polyethylene terephthalate or polyimide as a material to form the insulating layer not only exhibits relatively good insulating property but also offers relatively low cost.

As an optional technical solution of the embodiments of the present application, the protective member is configured to be capable of being damaged during the pressure relief of the battery cell.

In the above technical solution, during the pressure relief of the battery cell, the protective member is capable of being damaged, thereby allowing the first wall part to crack along the pressure relief groove, forming a relatively large opening for pressure relief, which is beneficial to improving the timeliness of pressure relief of the battery cell, thereby improving the reliability of the battery cell.

As an optional technical solution of the embodiments of the present application, the protective member is an insulating film.

In the above technical solution, when the protective member is an insulating film, the first wall part can be insulated and isolated from another component, thereby reducing the risk of a short circuit caused by the contact between the first wall part and another component. In addition, the insulating film is relatively thin and is easily damaged during the pressure relief of the battery cell, thereby facilitating the formation of a relatively large opening on the first wall part for pressure relief.

As an optional technical solution of the embodiments of the present application, a thickness of the protective member is H, satisfying: 0.02 mm ≤ H ≤ 0.14 mm.

In the above technical solution, when H ≥ 0.02 mm, the thickness of the protective member is relatively large, and the protective member exhibits a relatively high strength, providing a relatively good protective effect for the pressure relief groove. When H ≤ 0.14 mm, the thickness of the protective member is not too large, and the strength is not too high. During the pressure relief of the battery cell, the protective member is capable of being damaged, thereby facilitating the formation of a relatively large opening on the first wall part for pressure relief.

As an optional technical solution of the embodiments of the present application, 0.055 mm ≤ H ≤ 0.11 mm.

In the above technical solution, when H ≥ 0.055 mm, the thickness of the protective member is larger, and the protective member exhibits a higher strength, providing a better protective effect for the pressure relief groove. When H ≤ 0.11 mm, the thickness of the protective member is not too large, and the strength is not too high. During the pressure relief of the battery cell, the protective member is capable of being damaged, thereby facilitating the formation of a relatively large opening on the first wall part for pressure relief, and facilitating the rapid pressure relief of the battery cell.

As an optional technical solution of the embodiments of the present application, the pressure relief groove extends along a non-closed trajectory.

In the above technical solution, by arranging the pressure relief groove to extend along a non-closed trajectory, during the pressure relief of the battery cell, the predetermined pressure relief zone will open outwards in a flipping manner. The opened predetermined pressure relief zone is still partially connected to other parts of the first wall part other than the predetermined pressure relief zone, and the predetermined pressure relief zone will not be detached and ejected due to the rapid discharge of emissions.

As an optional technical solution of the embodiments of the present application, the pressure relief groove includes a first groove segment, a second groove segment, and a third groove segment, the first groove segment and the third groove segment are disposed opposite to each other, and the second groove segment connects the first groove segment and the third groove segment.

In the above technical solution, the pressure relief groove includes a first groove segment, a second groove segment, and a third groove segment, and the second groove segment connects the first groove segment and the third groove segment, such that the first wall part is capable of cracking along the first groove segment, the second groove segment, and the third groove segment during the pressure relief of the battery cell, thereby opening the predetermined pressure relief zone to release the internal pressure of the battery cell. The connection position of the first groove segment and the second groove segment as well as the connection position of the first groove segment and the third groove segment are weaker, and are more prone to cracking and opening the predetermined pressure relief zone for pressure relief, thereby further improving the pressure relief area and pressure relief rate of the battery cell.

As an optional technical solution of the embodiments of the present application, the pressure relief groove extends along a closed trajectory.

In the above technical solution, by arranging the pressure relief groove to extend along a closed trajectory, during the pressure relief of the battery cell, the predetermined pressure relief zone will be completely detached from other parts of the first wall part other than the predetermined pressure relief zone, thereby having a larger pressure relief area.

As an optional technical solution of the embodiments of the present application, the shell includes a shell body and an end cover. The shell body is provided with an opening, and the end cover is disposed on the shell body and closes the opening, where at least one wall part of the shell body is the first wall part.

In the above technical solution, when the shell body includes the first wall part, the pressure relief groove is disposed on one wall part of the shell body, and the ejected fluid medium does not easily act on other electrical connection structures on the end cover, which is beneficial to reducing the risk of a short circuit in the battery cell.

As an optional technical solution of the embodiments of the present application, the shell body is of a cylindrical structure, and the wall part of the shell body disposed around a center line of the shell body is the first wall part.

In the above technical solution, a peripheral wall of the cylindrical structure is the first wall part, and the area of the peripheral wall is relatively large, which facilitates the arrangement of the pressure relief groove. In addition, the protective member may wrap an outer side of the peripheral wall to better protect the pressure relief groove.

In a second aspect, the embodiments of the present application further provide a battery. The battery includes the above battery cell.

In a third aspect, the embodiments of the present application further provide an electric device. The electric device includes the above battery cell.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural diagram of a vehicle according to some embodiments of the present application;
FIG. 2 is an exploded view of a battery according to some embodiments of the present application;
FIG. 3 is a schematic structural diagram of a battery cell according to some embodiments of the present application;
FIG. 4 is an exploded view of a battery cell according to some embodiments of the present application;
FIG. 5 is a schematic top view of a battery cell according to some embodiments of the present application;
FIG. 6 is a cross-sectional view of position A-A in FIG. 5;
FIG. 7 is an enlarged view of position B in FIG. 6; and
FIG. 8 is a cross-sectional view of a protective member according to some embodiments of the present application.

Reference numerals: 1000-vehicle; 100-battery; 10-case; 11-first case body; 12-second case body; 20-battery cell; 21-shell; 211-shell body; 212-end cover; 213-first wall part; 2131-first surface; 2132-pressure relief groove; 2132a-first groove segment; 2132b-second groove segment; 2132c-third groove segment; 2133-predetermined pressure relief zone; 22-protective member; 221-insulating layer; 222-first adhesive layer; 223-second adhesive layer; 23-electrode assembly; 24-electrode terminal; 25-protrusion; 200-controller; 300-motor.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the aforementioned terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

The term "plurality of" used in the present application refers to no less than two (including two).

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

The battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector is provided with two surfaces opposite to each other in its own thickness direction, and the positive electrode active material is disposed on either or both of the two opposite surfaces of the positive electrode current collector.

As an example, a metal foil or a composite current collector may be used as the positive electrode current collector. For example, for the metal foil, aluminum treated with silver on the surface, stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in a combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), or LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof.

In some embodiments, a foam metal may be used as the positive electrode. The foam metal may be foam nickel, foam copper, foam aluminum, a foam alloy, or the like. When the foam metal is used as the positive electrode, the surface of the foam metal may not be provided with the positive electrode active material. Certainly, the positive electrode active material may also be provided. As an example, a lithium source material, a potassium metal, or a sodium metal may also be incorporated into and/or deposited in the foam metal; the lithium source material is a lithium metal and/or a lithium-rich material.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, nickel, titanium, or the like may be used. The foam metal may be foam nickel, foam copper, foam aluminum, a foam alloy, or the like. The composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

As an example, the negative electrode current collector is provided with two surfaces opposite to each other in its own thickness direction, and the negative electrode active material is disposed on either or both of the two opposite surfaces of the negative electrode current collector.

As an example, the negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in a combination of two or more.

In some embodiments, the material of the positive electrode current collector may be aluminum, and the material of the negative electrode current collector may be copper.

In some embodiments, the electrode assembly further includes a separator. The separator is disposed between the positive electrode and the negative electrode.

In some embodiments, the separator is a separation film. The separation film may be of various types, and any porous-structure separation film known to have good chemical stability and mechanical stability may be selected and used.

As an example, the material of the separation film may include at least one of glass fiber, non-woven fabric, polyethylene, polypropylene, and polyvinylidene fluoride. The separation film may be a single-layer film or a multi-layer composite film. When the separation film is a multi-layer composite film, the materials of the layers may be the same or different. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode from the negative electrode.

In some embodiments, the battery cell further includes an electrolyte that serves to conduct ions between the positive electrode and the negative electrode. The electrolyte may be liquid-state, gel-state, or solid-state. The liquid-state electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may include one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur or argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly is of a wound structure. The positive electrode plate and the negative electrode plate are wound to form a wound structure.

In some embodiments, the electrode assembly is of a stacked structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate disposed between adjacent folded segments.

As an example, the positive electrode plate and the negative electrode plate are both folded to form a plurality of stacked folded segments.

As an example, a plurality of separators may be provided and are separately disposed between any adjacent positive electrode plates or negative electrode plates.

As an example, the separators may be provided continuously and are disposed between any adjacent positive electrode plates or negative electrode plates by means of folding or winding.

In some embodiments, the shape of the electrode assembly may be cylindrical, flat, polygonal prismatic, or the like.

In some embodiments, the electrode assembly is provided with tabs that can conduct current out from the electrode assembly. The tabs include a positive electrode tab and a negative electrode tab.

In some embodiments, the battery cell may include a shell. The shell is configured to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell of other shapes. The prismatic battery cell includes, but is not limited to, a square-shell battery cell, a blade-shaped battery cell, and a polygonal prismatic battery, and the polygonal prismatic battery is, for example, a hexagonal prismatic battery.

The battery mentioned in the embodiments of the present application refers to a single physical module including one or a plurality of battery cells to provide higher voltage and capacity.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of a crossbeam and a longitudinal beam of the vehicle.

In some embodiments, the battery may be an energy storage device. The energy storage device includes an energy storage container, an energy storage electrical cabinet, and the like.

Batteries are widely used in the new energy field, such as in electric vehicles and new energy vehicles. New energy vehicles and electric vehicles have become a new trend in the development of the automobile industry. Battery technology advancement requires consideration of various design factors at the same time, such as battery service life, energy density, discharge capacity, charging and discharging rate, and other performance parameters. In addition, the reliability of batteries also needs to be considered. However, the reliability of current batteries is relatively poor.

For a battery cell, in order to improve the reliability of the battery cell, in the prior art, a pressure relief mechanism is welded on the battery cell, the pressure relief mechanism is provided with a weak part, and the weak part defines a pressure relief part. When the internal pressure of the battery cell reaches a burst pressure, the weak part cracks, and the pressure relief part is opened to release the internal pressure of the battery cell, thereby reducing the risk of explosion and fire in the battery cell.

However, during use of the battery cell, the weak part is easily opened in advance due to an external force, or the pressure relief mechanism is repeatedly deformed due to the gas pressure inside the battery cell, such that the weak part fails in fatigue and is opened in advance, resulting in failure to achieve a normal pressure relief function.

In view of this, the embodiments of the present application provide a battery cell. The battery cell includes a shell and a protective member. The shell includes a first wall part, the first wall part is provided with a first surface, the first surface is provided with a pressure relief groove, and the first wall part is configured to be capable of cracking along the pressure relief groove during pressure relief of the battery cell. The protective member is disposed on the first surface, and the protective member shields the pressure relief groove. In a thickness direction of the first wall part, the protective member and a groove opening of the pressure relief groove are arranged with a gap.

The first wall part of the battery cell is provided with a protective member, the protective member exhibits a certain strength, can resist external force interference to protect the pressure relief groove, and can also limit the deformation of the first wall part, thereby reducing the risk of the first wall part cracking in advance along the pressure relief groove caused by the pressure relief groove being subjected to a pressure change inside the battery cell. In addition, by providing the gap between the protective member and the groove opening of the pressure relief groove, the protective member does not easily prevent the first wall part from cracking along the pressure relief groove during the pressure relief of the battery cell, such that the pressure relief groove can rapidly crack for pressure relief during the pressure relief of the battery cell, which is beneficial to improving the reliability of the battery cell.

The battery cell disclosed in the embodiments of the present application can be used in, but is not limited to be used in, electric devices such as vehicles, ships, or aircraft. The battery cell and the battery disclosed in the present application may be assembled into a power system of the electric device. This helps improve the reliability of the battery cell.

The embodiments of the present application provide an electric device using a battery as the power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For ease of description, the following embodiments are illustrated by taking a vehicle as an example of the electric device according to an embodiment of the present application.

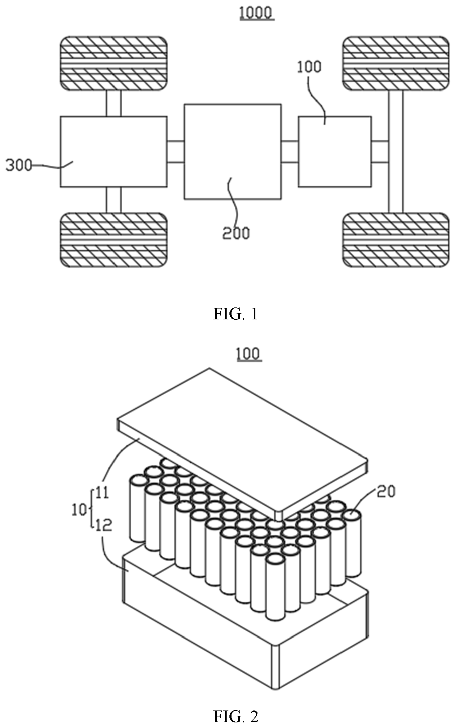

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000. The battery 100 may be disposed at the bottom of the vehicle 1000, or may be disposed at the head of the vehicle 1000, or may be disposed at the tail of the vehicle 1000. The battery 100 may be configured to power the vehicle 1000. For example, the battery 100 may serve as an operation power source or service power source for the vehicle 1000. The vehicle 1000 may further include a controller 200 and a motor 300. The controller 200 is configured to control the battery 100 to power the motor 300, e.g., for the operation power needed by the vehicle 1000 for start-up, navigation, and driving.

In some embodiments of the present application, the battery 100 may not only serve as an operation power source or service power source for the vehicle 1000, but also as a driving power source for the vehicle 1000 to, replacing or partially replacing fuel or natural gas, provide driving power for the vehicle 1000.

Referring to FIG. 2, FIG. 2 is an exploded view of a battery 100 according to some embodiments of the present application. The battery 100 includes a case 10 and a battery cell 20. The battery cell 20 is configured to be accommodated in the case 10.

The case 10 is configured to provide an assembly space for the battery cell 20, and the case 10 may be of various structures. In some embodiments, the case 10 may include a first case body 11 and a second case body 12. The first case body 11 and the second case body 12 are mutually lidded with each other. The first case body 11 and the second case body 12 jointly define an assembly space for accommodating the battery cell 20. The second case body 12 may be of a hollow structure with one end open, and the first case body 11 may be of a plate-shaped structure. The first case body 11 lids the open side of the second case body 12, such that the first case body 11 and the second case body 12 jointly define an assembly space; the first case body 11 and the second case body 12 may also both be of a hollow structure with one side open, and the open side of the first case body 11 lids the open side of the second case body 12.

Certainly, the case 10 formed by the first case body 11 and the second case body 12 may be in various shapes, such as a cylinder, a rectangular parallelepiped, or a cube. Illustratively, in FIG. 2, the case 10 is in the shape of a rectangular parallelepiped.

In the battery 100, one or a plurality of battery cells 20 disposed in the case 10 may be provided. If a plurality of battery cells 20 disposed in the case 10 are provided, the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may be that in the battery 100, the plurality of battery cells 20 are first connected in series, in parallel, or in series-parallel to form battery modules, and then the plurality of battery modules are connected in series, in parallel, or in series-parallel to form a whole, the whole being accommodated in the case 10.

In some embodiments, the battery 100 may further include other structures. For example, the battery 100 may further include a busbar component, and the busbar component is configured to connect the plurality of battery cells 20 to achieve an electrical connection among the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be in the shape of a rectangular parallelepiped, a cylinder, a prism, or other shapes. Illustratively, in FIG. 2, the battery cell 20 is of a cylindrical structure.

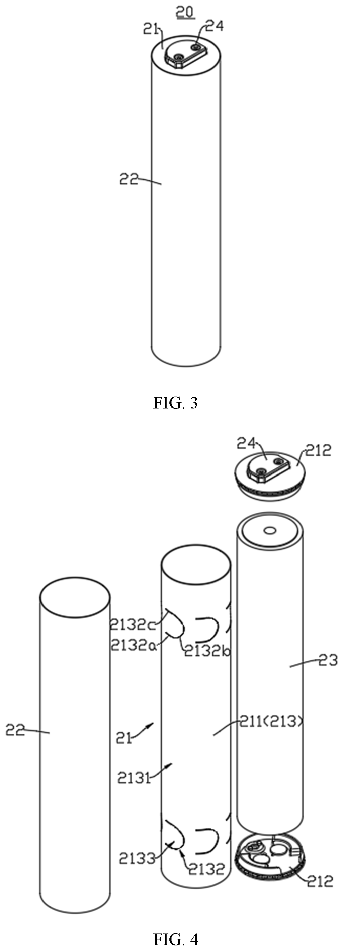

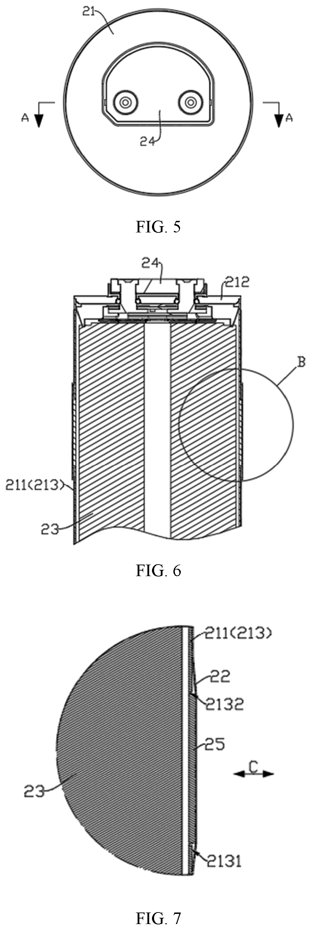

Referring to FIGs. 3, 4, 5, 6, and 7, FIG. 3 is a schematic structural diagram of a battery cell 20 according to some embodiments of the present application. FIG. 4 is an exploded view of a battery cell 20 according to some embodiments of the present application. FIG. 5 is a schematic top view of a battery cell 20 according to some embodiments of the present application. FIG. 6 is a cross-sectional view of position A-A in FIG. 5. FIG. 7 is an enlarged view of position B in FIG. 6. The embodiments of the present application provide a battery cell 20. The battery cell 20 includes a shell 21 and a protective member 22. The shell 21 includes a first wall part 213, the first wall part 213 is provided with a first surface 2131, the first surface 2131 is provided with a pressure relief groove 2132, and the first wall part 213 is configured to be capable of cracking along the pressure relief groove 2132 during pressure relief of the battery cell 20. The protective member 22 is disposed on the first surface 2131, and the protective member 22 shields the pressure relief groove 2132. In the thickness direction of the first wall part 213, the protective member 22 and a groove opening of the pressure relief groove 2132 are arranged with a gap.

The battery cell 20 refers to the smallest unit forming a battery 100.

The shell 21 includes an end cover 212 and a shell body 211, the shell body 211 is provided with an opening, and the end cover 212 is connected to the shell body 211 and closes the opening.

The end cover 212 refers to a component that lids the opening of the shell body 211 to isolate the internal environment of the battery cell 20 from the external environment. Without limitation, the shape of the end cover 212 may be adapted to the shape of the shell body 211 to match the shell body 211. Optionally, the end cover 212 may be made of a material with a certain hardness and strength (for example, an aluminum alloy), such that the end cover 212 is not easily deformed when being squeezed or collided. This enables the battery cell 20 to have higher structural strength, and the safety performance can also be improved. The end cover 212 may also be made of various materials, such as copper, iron, aluminum, stainless steel, aluminum alloy, and plastic, which is not specially limited in the embodiments of the present application. Functional components, such as electrode terminals 24, may be disposed on the end cover 212. The electrode terminal 24 may be configured to be electrically connected to the electrode assembly 23 to output or input the electric energy of the battery cell 20. In some embodiments, the battery cell 20 further includes an insulating member, and the insulating member is disposed on the inner side of the end cover 212. The insulating member may be configured to isolate the electrical connection component in the shell body 211 from the end cover 212 to reduce the risk of a short circuit. Illustratively, the insulating member may be made of plastic, rubber, or the like.

The shell body 211 is a component configured to form the internal environment of the battery cell 20 in combination with the end cover 212. The formed internal environment may be used to accommodate the electrode assembly 23, the electrolytic solution, and other components. The shell body 211 and the end cover 212 may be independent components. An opening may be formed in the shell body 211, and at the opening, the end cover 212 lids the opening to form the internal environment of the battery cell 20. Without limitation, the end cover 212 and the shell body 211 may be integrated. Specifically, the end cover 212 and the shell body 211 may form a common engaging surface before other components are placed in the shell, and when the interior of the shell body 211 needs to be encapsulated, the shell body 211 is lidded with the end cover 212. The shell body 211 may be in various shapes and dimensions, such as a rectangular parallelepiped, a cylinder, and a hexagonal prism. Specifically, the shape of the shell body 211 may be determined according to the specific shape and dimension of the electrode assembly 23. The shell body 211 may be made of various materials, such as copper, iron, aluminum, stainless steel, aluminum alloy, and plastic, which is not specially limited in the embodiments of the present application.

The electrode assembly 23 is a component where the electrochemical reaction occurs in the battery cell 20. One or more electrode assemblies 23 may be accommodated in the shell 21. The electrode assembly 23 is mainly formed by winding or stacking a positive electrode plate and a negative electrode plate, and a separation film is generally disposed between the positive electrode plate and the negative electrode plate. The portions of the positive electrode plate and the negative electrode plate that contain the active substance constitute the main body part of the electrode assembly 23, and the portions of the positive electrode plate and the negative electrode plate that do not contain the active substance each constitute a tab. The positive electrode tab and the negative electrode tab may be located together at one end of the main body part or respectively at two ends of the main body part. During the charging and discharging of the battery 100, the positive electrode active substance and the negative electrode active substance react with the electrolytic solution.

The first wall part 213 may be the end cover 212 of the shell 21, or may be one wall part of the shell body 211 of the shell 21. Illustratively, in FIGs. 3 and 4, the shell body 211 is of a tubular structure with openings at two ends. The shell 21 includes two end covers 212, and the two end covers 212 lid two openings of the shell body 211, respectively. The first wall part 213 is the shell body 211.

The pressure relief groove 2132 plays a role of pressure relief, and is configured to enable the first wall part 213 to crack along the pressure relief groove 2132 when the internal pressure or temperature of the battery cell 20 reaches a predetermined value, to release the internal pressure of the battery cell 20. Which wall part of the shell 21 is the first wall part 213 may be determined according to the disposed position of the pressure relief groove 2132. For example, when the pressure relief groove 2132 is disposed on the end cover 212, the end cover 212 is the first wall part 213. When the pressure relief groove 2132 is disposed on a bottom wall of the shell body 211, the bottom wall is the first wall part 213. When the pressure relief groove 2132 is disposed on a side wall of the shell body 211, the side wall is the first wall part 213.

The protective member 22 provides a protective function. The protective member 22 is disposed on the first wall part 213 and shields the pressure relief groove 2132 to protect the pressure relief groove 2132 and reduce the risk of the pressure relief groove 2132 being damaged by an external force. The protective member 22 and the pressure relief groove 2132 are disposed on the same surface of the first wall part 213. For example, both the protective member 22 and the pressure relief groove 2132 may be disposed on a surface, facing away from an interior of the shell 21, of the first wall part 213. For another example, both the protective member 22 and the pressure relief groove 2132 may be disposed on a surface, facing the interior of the shell 21, of the first wall part 213.

"The protective member 22 shields the pressure relief groove 2132" means that in the thickness direction of the first wall part 213, a projection of the protective member 22 can cover the groove opening of the pressure relief groove 2132. Referring to FIG. 7, the thickness direction of the first wall part 213 may be the C direction shown in the figure.

"In the thickness direction of the first wall part 213, the protective member 22 and a groove opening of the pressure relief groove 2132 are arranged with a gap" means that there is a distance between the protective member 22 and the groove opening of the pressure relief groove 2132 in the thickness direction of the first wall part 213.

The first wall part 213 of the battery cell 20 is provided with a protective member 22, the protective member 22 exhibits a certain strength, can resist external force interference to protect the pressure relief groove 2132, and can also limit the deformation of the first wall part 213, thereby reducing the risk of the first wall part 213 cracking in advance along the pressure relief groove 2132 caused by the pressure relief groove 2132 being subjected to a pressure change inside the battery cell 20. In addition, by providing the gap between the protective member 22 and the groove opening of the pressure relief groove 2132, the protective member 22 does not easily prevent the first wall part 213 from cracking along the pressure relief groove 2132 during the pressure relief of the battery cell 20, such that the pressure relief groove 2132 can rapidly crack for pressure relief during the pressure relief of the battery cell 20, which is beneficial to improving the reliability of the battery cell 20.

Referring to FIGs. 3, 4, 5, 6, and 7, in some embodiments, the first surface 2131 is provided with a protrusion 25, and the protrusion 25 is in contact with the protective member 22, such that the protective member 22 and the groove opening of the pressure relief groove 2132 are arranged with a gap.

The protrusion 25 protrudes from the first surface 2131, and the protrusion 25 is in contact with the protective member 22 to partially jack up the protective member 22, such that the protective member 22 and the groove opening of the pressure relief groove 2132 are arranged with the gap.

Optionally, in the thickness direction of the first wall part 213, the protrusion 25 is provided with a second surface farthest away from the first surface 2131, and the protective member 22 is disposed on the second surface.

By providing the protrusion 25 on the first surface 2131, the protective member 22 can be attached to the first surface 2131 and the protrusion 25, which can not only protect the pressure relief groove 2132, but also limit the deformation of the first wall part 213, thereby reducing the risk of the first wall part 213 cracking in advance along the pressure relief groove 2132 caused by the pressure relief groove 2132 being subjected to a pressure change inside the battery cell 20. Since the protrusion 25 protrudes from the first surface 2131, when the protective member 22 is disposed on the first surface 2131 and the protrusion 25, the protective member 22 can cross the opening position of the pressure relief groove 2132, such that the protective member 22 and the opening of the pressure relief groove 2132 are arranged with the gap.

Referring to FIGs. 3, 4, 5, 6, and 7, in some embodiments, the pressure relief groove 2132 defines a predetermined pressure relief zone 2133, the predetermined pressure relief zone 2133 is configured to crack with the pressure relief groove 2132 as a boundary during the pressure relief of the battery cell 20. The protrusion 25 is located in the predetermined pressure relief zone 2133.

The predetermined pressure relief zone 2133 is a zone defined in an enclosing manner by the pressure relief groove 2132, and the pressure relief groove 2132 is disposed along an edge of the predetermined pressure relief zone 2133. For example, when the pressure relief groove 2132 is an annular groove, the predetermined pressure relief zone 2133 is a zone in the inner side of the annular groove. For another example, when the pressure relief groove 2132 is a U-shaped groove, the predetermined pressure relief zone 2133 is a zone defined in an enclosing manner by a connecting line between two ends of the U-shaped groove and the U-shaped groove.

During the pressure relief of the battery cell 20, the predetermined pressure relief zone 2133 cracks with the pressure relief groove 2132 as a boundary, and the predetermined pressure relief zone 2133 can be opened to form an opening on the first wall part 213 for gas inside the battery cell 20 to be discharged.

The protrusion 25 is located in the predetermined pressure relief zone 2133. In some embodiments, the protrusion 25 partially protrudes from the predetermined pressure relief zone 2133. In some other embodiments, the predetermined pressure relief zone 2133 entirely protrudes from the first surface 2131 to form the protrusion 25.

The pressure relief groove 2132 defines the predetermined pressure relief zone 2133, and the protrusion 25 is disposed in the predetermined pressure relief zone 2133, which may also be understood as the pressure relief groove 2132 being disposed in an enclosing manner on an outer side of the protrusion 25. In this way, when the protective member 22 is in contact with the protrusion 25 and the first surface 2131, the protective member can better shield the pressure relief groove 2132, and the protective member and the opening of the pressure relief groove 2132 are arranged with the gap.

Referring to FIGs. 3, 4, 5, 6, and 7, in some embodiments, the first surface 2131 is a surface, facing away from the interior of the shell 21, of the first wall part 213.

"The first surface 2131 is a surface, facing away from the interior of the shell 21, of the first wall part 213" means that the first surface 2131 is an outer surface of the first wall part 213. The pressure relief groove 2132 is recessed from the first surface 2131 toward a surface, facing the interior of the shell 21, of the first wall part 213.

The first surface 2131 is the outer surface of the first wall part 213. In one aspect, the protective member 22 can be disposed more conveniently. In another aspect, when the gas inside the battery cell 20 acts on the first wall part 213, there is no need to bypass the protective member 22, thereby facilitating rapid pressure relief of the battery cell 20.

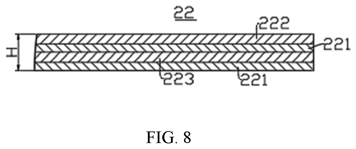

Referring to FIG. 8, FIG. 8 is a cross-sectional view of a protective member 22 according to some embodiments of the present application. In some embodiments, the protective member 22 includes an insulating layer 221 and a first adhesive layer 222, and the first adhesive layer 222 is disposed on one side of the insulating layer 221. The first adhesive layer 222 connects the first wall part 213 and the insulating layer 221.

The insulating layer 221 is made of an insulating material, provides an insulating function, and can achieve insulation and isolation between two components. The material of the insulating layer 221 may be plastic, rubber, or the like.

The first adhesive layer 222 is disposed on one side of the insulating layer 221, the first adhesive layer 222 is adhesive, and the first adhesive layer 222 can adhere the insulating layer 221 to the first wall part 213.

The protective member 22 includes an insulating layer 221, and the insulating layer 221 can play a role of insulation and isolation, thereby reducing the risk of a short circuit caused by the contact between another component and the first wall part 213. The protective member 22 further includes a first adhesive layer 222, the first adhesive layer 222 being adhesive, and the protective member 22 can be quickly adhered to the first wall part 213 through the first adhesive layer 222.

Referring to FIG. 8, in some embodiments, the protective member 22 includes a second adhesive layer 223 and a plurality of insulating layers 221, the plurality of insulating layers 221 are disposed in a stacked manner, and two adjacent insulating layers 221 are connected through the second adhesive layer 223.

The protective member 22 may include two insulating layers 221, three insulating layers 221, four insulating layers 221, or more than four insulating layers 221, and the plurality of insulating layers 221 are disposed in a stacked manner. Referring to FIG. 8, in the embodiment shown in FIG. 8, the protective member 22 includes two insulating layers 221.

The second adhesive layer 223 is adhesive, and the second adhesive layer 223 is configured to adhere two adjacent insulating layers 221.

By providing the plurality of insulating layers 221, the plurality of insulating layers 221 are disposed in a stacked manner, and the plurality of insulating layers 221 can provide higher strength and better insulating property. The two adjacent insulating layers 221 are connected through the second adhesive layer 223, such that the protective member 22 exhibits better toughness, and the protective member 22 is more easily attached to the shell body 211 to better protect the pressure relief groove 2132 and limit the deformation of the first wall part 213, thereby reducing the risk of the first wall part 213 cracking in advance along the pressure relief groove 2132 caused by the pressure relief groove 2132 being subjected to a pressure change inside the battery cell 20.

In some embodiments, the material of the insulating layer 221 is polyethylene terephthalate or polyimide.

Polyethylene terephthalate may also be referred to as PET (polyethylene glycol terephthalate), and it exhibits relatively good insulating property.

Polyimide may also be referred to as PI (polyimide), and it exhibits relatively good insulating property.

Using polyethylene terephthalate or polyimide as a material to form the insulating layer 221 not only exhibits relatively good insulating property but also offers relatively low cost.

In some embodiments, the protective member 22 is configured to be capable of being damaged during the pressure relief of the battery cell 20.

In some embodiments, the protective member 22 may be of a thin film structure. During the pressure relief of the battery cell 20, the predetermined pressure relief zone 2133 is opened, and the protective member 22 is torn under the action of the predetermined pressure relief zone 2133, thereby forming a relatively large opening for gas inside the battery cell 20 to flow out.

In some other embodiments, the protective member 22 may be provided with a weak part. During the pressure relief of the battery cell 20, the predetermined pressure relief zone 2133 is opened, and the weak part is torn under the action of the predetermined pressure relief zone 2133, thereby forming a relatively large opening for gas inside the battery cell 20 to flow out.

During the pressure relief of the battery cell 20, the protective member 22 is capable of being damaged, thereby allowing the first wall part 213 to crack along the pressure relief groove 2132, forming a relatively large opening for pressure relief, which is beneficial to improving the timeliness of pressure relief of the battery cell 20, thereby improving the reliability of the battery cell 20.

In some embodiments, the protective member 22 is an insulating film.

Optionally, the protective member 22 may be a blue film.

When the protective member 22 is an insulating film, the first wall part 213 can be insulated and isolated from another component, thereby reducing the risk of a short circuit caused by the contact between the first wall part 213 and another component. In addition, the insulating film is relatively thin and is easily damaged during the pressure relief of the battery cell 20, thereby facilitating the formation of a relatively large opening on the first wall part 213 for pressure relief.

Referring to FIG. 8, in some embodiments, the thickness of the protective member 22 is H, satisfying: 0.02 mm ≤ H ≤ 0.14 mm.

H represents the thickness of the protective member 22, the minimum thickness of the protective member 22 is not less than 0.02 mm, and the maximum thickness of the protective member 22 is not greater than 0.14 mm.

The thickness of the protective member 22 may be: H = 0.02 mm, 0.04 mm, 0.06 mm, 0.08 mm, 0.1 mm, 0.12 mm, 0.14 mm, or the like.

When H ≥ 0.02 mm, the thickness of the protective member 22 is relatively large, and the protective member 22 exhibits a relatively high strength, providing a relatively good protective effect for the pressure relief groove 2132. When H ≤ 0.14 mm, the thickness of the protective member 22 is not too large, and the strength is not too high. During the pressure relief of the battery cell 20, the protective member 22 is capable of being damaged, thereby facilitating the formation of a relatively large opening on the first wall part 213 for pressure relief.

Optionally, 0.055 mm ≤ H ≤ 0.11 mm.

The thickness of the protective member 22 may be: H = 0.055 mm, 0.06 mm, 0.07 mm, 0.08 mm, 0.09 mm, 0.1 mm, 0.11 mm, 0.12 mm, 0.13 mm, 0.14 mm, or the like.

When H ≥ 0.055 mm, the thickness of the protective member 22 is larger, and the protective member 22 exhibits a higher strength, providing a better protective effect for the pressure relief groove 2132. When H ≤ 0.11 mm, the thickness of the protective member 22 is not too large, and the strength is not too high. During the pressure relief of the battery cell 20, the protective member 22 is capable of being damaged, thereby facilitating the formation of a relatively large opening on the first wall part 213 for pressure relief, and facilitating the rapid pressure relief of the battery cell 20.

In some embodiments, the pressure relief groove 2132 extends along a non-closed trajectory.

The pressure relief groove 2132 extends along the non-closed trajectory, and there is a spacing between two ends of the pressure relief groove 2132. For example, the pressure relief groove 2132 may extend along a C-shaped trajectory. For another example, the pressure relief groove 2132 may extend along a U-shaped trajectory.

By arranging the pressure relief groove 2132 to extend along a non-closed trajectory, during the pressure relief of the battery cell 20, the predetermined pressure relief zone 2133 will open outwards in a flipping manner. The opened predetermined pressure relief zone 2133 is still partially connected to other parts of the first wall part 213 other than the predetermined pressure relief zone 2133, and the predetermined pressure relief zone 2133 will not be detached and ejected due to the rapid discharge of emissions.

Referring to FIGs. 3, 4, 5, 6, and 7, in some embodiments, the pressure relief groove 2132 includes a first groove segment 2132a, a second groove segment 2132b, and a third groove segment 2132c, the first groove segment 2132a and the third groove segment 2132c are disposed opposite to each other, and the second groove segment 2132b connects the first groove segment 2132a and the third groove segment 2132c.

The first groove segment 2132a and the third groove segment 2132c are spaced apart from each other and at least partially opposite to each other. Optionally, both the first groove segment 2132a and the third groove segment 2132c are straight line groove segments.

The second groove segment 2132b connects the first groove segment 2132a and the third groove segment 2132c; that is, the second groove segment 2132b is located between the first groove segment 2132a and the third groove segment 2132c, and two ends of the second groove segment 2132b are connected to the first groove segment 2132a and the third groove segment 2132c, respectively. Certainly, in other embodiments, two ends of the second groove segment 2132b may extend out of the first groove segment 2132a and the third groove segment 2132c, respectively.

A connecting line between a free end of the first groove segment 2132a and a free end of the third groove segment 2132c is a first connecting line, and the first connecting line and the second groove segment 2132b are disposed opposite to each other. A closed zone jointly defined in an enclosing manner by the first groove segment 2132a, the second groove segment 2132b, the third groove segment 2132c, and the first connecting line is the predetermined pressure relief zone 2133. That is, the first groove segment 2132a, the second groove segment 2132b, and the third groove segment 2132c are structures disposed along the edge of the predetermined pressure relief zone 2133, such that the predetermined pressure relief zone 2133 can be opened with the first groove segment 2132a, the second groove segment 2132b, and the third groove segment 2132c as a boundary. That is, the predetermined pressure relief zone 2133 is formed in the zone defined in an enclosing manner by the first groove segment 2132a, the second groove segment 2132b, and the third groove segment 2132c.

Referring to FIGs. 3 and 4, the shape of the pressure relief groove 2132 jointly formed by the first groove segment 2132a, the second groove segment 2132b, and the third groove segment 2132c may be a "U"-shaped structure; that is, one end of the second groove segment 2132b is connected to one end of the first groove segment 2132a, and the other end of the second groove segment is connected to one end of the third groove segment 2132c, so as to form one predetermined pressure relief zone 2133 on the first wall part 213. In this case, the first connecting line closes the opening end of the U-shaped structure.

In some other embodiments, the shape of the pressure relief groove 2132 jointly formed by the first groove segment 2132a, the second groove segment 2132b, and the third groove segment 2132c may be like an "H"-shaped structure. In this case, one end of the second groove segment 2132b is connected between two ends of the first groove segment 2132a, and the other end of the second groove segment 2132b is connected between two ends of the third groove segment 2132c.

In yet some other embodiments, the pressure relief groove 2132 extends along a closed trajectory.

The pressure relief groove 2132 extends along the closed trajectory; that is, the pressure relief groove 2132 is an annular groove.

By arranging the pressure relief groove 2132 to extend along a closed trajectory, during the pressure relief of the battery cell 20, the predetermined pressure relief zone 2133 will be completely detached from other parts of the first wall part 213 other than the predetermined pressure relief zone 2133, thereby having a larger pressure relief area.

In some embodiments, the shell 21 includes a shell body 211 and an end cover 212. The shell body 211 is provided with an opening, and the end cover 212 is disposed on the shell body 211 and closes the opening. At least one wall part of the shell body 211 is a first wall part 213.

In some embodiments, the shell 21 may include a shell body 211 and two end covers 212. An accommodating cavity is formed inside the shell body 211, and the accommodating cavity is configured to accommodate an electrode assembly 23. Openings are formed at two ends of the shell body 211, and the two openings are both communicated with the accommodating cavity. The two end covers 212 close the two openings, respectively, and the shell body 211 is the first wall part 213.

In some other embodiments, the shell body 211 includes a side wall and a bottom wall that are integrally formed; that is, the shell body 211 is processed and formed using an integral forming process such as stamping, casting, or extrusion forming. That is, the side wall and the bottom wall of the shell body 211 are of an integrated structure. An opening is formed at one end of the shell body 211, and the opening is disposed opposite to the bottom wall. In this case, one of the side wall and the bottom wall is the first wall part 213.

When the shell body 211 includes the first wall part 213, the pressure relief groove 2132 is disposed on one wall part of the shell body 211, and the ejected fluid medium does not easily act on other electrical connection structures on the end cover 212, which is beneficial to reducing the risk of a short circuit in the battery cell 20.

Referring to FIGs. 3 and 4, in some embodiments, the shell body 211 is of a cylindrical structure, and the wall part of the shell body 211 disposed around a center line of the shell body is the first wall part 213.

In some embodiments, the shell 21 may include a shell body 211 and two end covers 212. An accommodating cavity is formed inside the shell body 211, and the accommodating cavity is configured to accommodate an electrode assembly 23. Openings are formed at two ends of the shell body 211, and the two openings are both communicated with the accommodating cavity. The two end covers 212 close the two openings, respectively. The shell body 211 is of a cylindrical structure, and the shell body 211 itself is the first wall part 213.

In some other embodiments, the shell body 211 includes a side wall and a bottom wall that are integrally formed, where the side wall is the wall part of the shell body 211 disposed around the center line of the shell body; that is, the side wall is the first wall part 213.

A peripheral wall of the cylindrical structure is the first wall part 213, and the area of the peripheral wall is relatively large, which facilitates the arrangement of the pressure relief groove 2132. In addition, the protective member 22 may wrap an outer side of the peripheral wall to better protect the pressure relief groove 2132.

The embodiments of the present application further provide a battery 100. The battery 100 includes the above battery cell 20.

The embodiments of the present application further provide an electric device. The electric device includes the above battery cell 20.

According to some embodiments of the present application, refer to FIGs. 3 to 8.

The embodiments of the present application provide a battery cell 20. The battery cell 20 includes a shell 21 and a protective member 22. The shell 21 includes a first wall part 213, the first wall part 213 is provided with an outer surface, the outer surface is provided with a pressure relief groove 2132, and the first wall part 213 is configured to be capable of cracking along the pressure relief groove 2132 during pressure relief of the battery cell 20. The protective member 22 is disposed on the outer surface, and the protective member 22 shields the pressure relief groove 2132. In the thickness direction of the first wall part 213, the protective member 22 and a groove opening of the pressure relief groove 2132 are arranged with a gap. The first wall part 213 of the battery cell 20 is provided with a protective member 22, the protective member 22 exhibits a certain strength, can resist external force interference to protect the pressure relief groove 2132, and can also limit the deformation of the first wall part 213, thereby reducing the risk of the first wall part 213 cracking in advance along the pressure relief groove 2132 caused by the pressure relief groove 2132 being subjected to a pressure change inside the battery cell 20. In addition, by providing the gap between the protective member 22 and the groove opening of the pressure relief groove 2132, the protective member 22 does not easily prevent the first wall part 213 from cracking along the pressure relief groove 2132 during the pressure relief of the battery cell 20, such that the pressure relief groove 2132 can rapidly crack for pressure relief during the pressure relief of the battery cell 20, which is beneficial to improving the reliability of the battery cell 20.

The outer surface is provided with a protrusion 25, and the protrusion 25 is in contact with the protective member 22, such that the protective member 22 and the opening of the pressure relief groove 2132 are arranged with a gap. By providing the protrusion 25 on the outer surface, the protective member 22 can be attached to the outer surface and the protrusion 25, which can not only protect the pressure relief groove 2132, but also limit the deformation of the first wall part 213, thereby reducing the risk of the first wall part 213 cracking in advance along the pressure relief groove 2132 caused by the pressure relief groove 2132 being subjected to a pressure change inside the battery cell 20. Since the protrusion 25 protrudes from the outer surface, when the protective member 22 is disposed on the outer surface and the protrusion 25, the protective member 22 can cross the opening position of the pressure relief groove 2132, such that the protective member 22 and the opening of the pressure relief groove 2132 are arranged with the gap.

The pressure relief groove 2132 defines a predetermined pressure relief zone 2133, the predetermined pressure relief zone 2133 is configured to crack with the pressure relief groove 2132 as a boundary during the pressure relief of the battery cell 20, and the protrusion 25 is located in the predetermined pressure relief zone 2133. The pressure relief groove 2132 defines the predetermined pressure relief zone 2133, and the protrusion 25 is disposed in the predetermined pressure relief zone 2133, which may also be understood as the pressure relief groove 2132 being disposed in an enclosing manner on an outer side of the protrusion 25. In this way, when the protective member 22 is in contact with the protrusion 25 and the outer surface, the protective member can better shield the pressure relief groove 2132, and the protective member and the opening of the pressure relief groove 2132 are arranged with the gap.

The protective member 22 includes an insulating layer 221 and a first adhesive layer 222, the first adhesive layer 222 is disposed on one side of the insulating layer 221, and the first adhesive layer 222 connects the first wall part 213 and the insulating layer 221. The protective member 22 includes an insulating layer 221, and the insulating layer 221 can play a role of insulation and isolation, thereby reducing the risk of a short circuit caused by the contact between another component and the first wall part 213. The protective member 22 further includes a first adhesive layer 222, the first adhesive layer 222 being adhesive, and the protective member 22 can be quickly adhered to the first wall part 213 through the first adhesive layer 222.

The protective member 22 includes a second adhesive layer 223 and a plurality of insulating layers 221, the plurality of insulating layers 221 are disposed in a stacked manner, and two adjacent insulating layers 221 are connected through the second adhesive layer 223. By providing the plurality of insulating layers 221, the plurality of insulating layers 221 are disposed in a stacked manner, and the plurality of insulating layers 221 can provide higher strength and better insulating property. The two adjacent insulating layers 221 are connected through the second adhesive layer 223, such that the protective member 22 exhibits better toughness, and the protective member 22 is more easily attached to the shell body 211 to better protect the pressure relief groove 2132 and limit the deformation of the first wall part 213, thereby reducing the risk of the first wall part 213 cracking in advance along the pressure relief groove 2132 caused by the pressure relief groove 2132 being subjected to a pressure change inside the battery cell 20.

The above are only preferred embodiments of the present application and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery cell, comprising:
a shell, comprising a first wall part, wherein the first wall part is provided with a first surface, the first surface is provided with a pressure relief groove, and the first wall part is configured to be capable of cracking along the pressure relief groove during pressure relief of the battery cell; and
a protective member, disposed on the first surface, wherein the protective member shields the pressure relief groove, and in a thickness direction of the first wall part, the protective member and a groove opening of the pressure relief groove are arranged with a gap.

2. The battery cell according to claim 1, wherein the first surface is provided with a protrusion, and the protrusion is in contact with the protective member, such that the protective member and the groove opening of the pressure relief groove are arranged with the gap.

3. The battery cell according to claim 2, wherein the pressure relief groove defines a predetermined pressure relief zone, the predetermined pressure relief zone is configured to crack with the pressure relief groove as a boundary during the pressure relief of the battery cell, and the protrusion is located in the predetermined pressure relief zone.

4. The battery cell according to any one of claims 1 to 3, wherein the first surface is a surface, facing away from an interior of the shell, of the first wall part.

5. The battery cell according to any one of claims 1 to 4, wherein the protective member comprises an insulating layer and a first adhesive layer, the first adhesive layer is disposed on one side of the insulating layer, and the first adhesive layer connects the first wall part and the insulating layer.

6. The battery cell according to claim 5, wherein the protective member comprises a second adhesive layer and a plurality of insulating layers, the plurality of insulating layers are disposed in a stacked manner, and two adjacent insulating layers are connected through the second adhesive layer.

7. The battery cell according to claim 5 or 6, wherein a material of the insulating layer is polyethylene terephthalate or polyimide.

8. The battery cell according to any one of claims 1 to 7, wherein the protective member is configured to be capable of being damaged during the pressure relief of the battery cell.

9. The battery cell according to any one of claims 1 to 8, wherein the protective member is an insulating film.

10. The battery cell according to any one of claims 1 to 9, wherein a thickness of the protective member is H, satisfying: 0.02 mm ≤ H ≤ 0.14 mm.

11. The battery cell according to claim 10, wherein 0.055 mm ≤ H ≤ 0.11 mm.

12. The battery cell according to any one of claims 1 to 11, wherein the pressure relief groove extends along a non-closed trajectory.

13. The battery cell according to claim 12, wherein the pressure relief groove comprises a first groove segment, a second groove segment, and a third groove segment, the first groove segment and the third groove segment are disposed opposite to each other, and the second groove segment connects the first groove segment and the third groove segment.

14. The battery cell according to any one of claims 1 to 13, wherein the pressure relief groove extends along a closed trajectory.

15. The battery cell according to any one of claims 1 to 14, wherein the shell comprises:
a shell body, provided with an opening; and
an end cover, disposed on the shell body and closing the opening,
wherein at least one wall part of the shell body is the first wall part.

16. The battery cell according to claim 15, wherein the shell body is of a cylindrical structure, and the wall part of the shell body disposed around a center line of the shell body is the first wall part.

17. A battery, comprising the battery cell according to any one of claims 1 to 16.

18. An electric device, comprising the battery cell according to any one of claims 1 to 16.
